# EUROPEAN PATENT APPLICATION

(11) **EP 4 668 568 A1**
(43) Date of publication of application: **24.12.2025**
(21) Application number: 24788249.1
(22) Date of filing: 15.04.2024
(51) Int. Cl.: H02P 6/06, A01D 69/02, B60L 15/20, H02P 21/00, H02P 6/04

(54) **LAWN MOWER AND ALL-TERRAIN VEHICLE**

(30) Priority: 13.04.2023 CN 202310396150; 26.04.2023 CN 202310465722; 14.03.2024 CN 202410296976; 20.03.2024 CN 202410323098
(71) Applicant: Nanjing Chervon Industry Co., Ltd., Nanjing, Jiangsu 211106 (CN)
(72) Inventor: WANG, Shoubin, Nanjing, Jiangsu 211106 (CN); WANG, Lei, Nanjing, Jiangsu 211106 (CN); YANG, Dezhong, Nanjing, Jiangsu 211106 (CN)
(74) Representative: Sun, Yiming
(86) International application number: PCT/CN2024/087658
(87) International publication number: WO 2024/213154

(57) **Abstract**

Provided are a mower and an all-terrain vehicle. The mower includes: a vehicle frame and multiple functional devices. The multiple functional devices include at least: a traveling assembly including traveling wheels for driving the mower to travel on the ground and a traveling motor for driving the traveling wheels; an operation assembly configured to be operated by a user to control the mower; and a power supply assembly configured to supply energy to the traveling assembly. The mower further includes a communication system, where the communication system includes control modules connected to the multiple functional devices, and the multiple control modules are capable of communicating with each other through a first channel. The communication system further includes a second channel, and the second channel is configured to transmit communication information between at least two control modules. With the preceding technical solutions, the mower with the communication link self-recovery function and the fault self-diagnosis function can be provided, and when communication between some functional devices of the mower is abnormal, a communication link between the other functional devices can still be established through the second channel.

## Description

This application claims priority to Chinese Patent Application No. 202310396150.8 filed with the China National Intellectual Property Administration (CNIPA) on Apr. 13, 2023, Chinese Patent Application No. 202310465722.3 filed with the CNIPA on Apr. 26, 2023, Chinese Patent Application No. 202410296976.1 filed with the CNIPA on Mar. 14, 2024, and Chinese Patent Application No. 202410323098.8 filed with the CNIPA on Mar. 20, 2024, the disclosures of which are incorporated herein by reference in their entireties.

### TECHNICAL FIELD

The present application specifically relates to a communication mode for a mower and an all-terrain vehicle (ATV).

### BACKGROUND

With the development of mower technology and the increasing use demands of users, functional devices in mowers gradually increase, and different functional devices can be used to perform different functional tasks. In order that different functional devices cooperate with each other, the functional modules are generally networked and communicate in a wired or wireless manner so that data interaction and communication between the functional modules are implemented. However, a wire harness or a functional device often fails in an actual application process. As a result, the functional devices after the failure point cannot communicate normally, thereby affecting normal operation of the functional devices. In addition, if a failure occurs in a bus communication process, it is difficult to determine the cause of the failure.

This part provides background information related to the present application, and the background information is not necessarily the existing art.

### SUMMARY

An object of the present application is to solve or at least alleviate part or all of the preceding problems. Therefore, an object of the present application is to provide a mower and an all-terrain vehicle. With the preceding technical solutions, the mower with the fault self-diagnosis function can be provided, and when communication between some functional devices of the mower is abnormal, communication between the remaining functional devices can still be implemented.

To achieve the preceding object, the present application adopts the technical solution described below. A mower includes: a vehicle body including a vehicle frame; and multiple functional devices. The multiple functional devices include at least: a traveling assembly including traveling wheels for driving the mower to travel on the ground and a traveling motor for driving the traveling wheels; an operation assembly configured to be operated by a user to control the mower; and a power supply assembly configured to supply energy to the traveling assembly.

The mower further includes a communication system, where the communication system includes control modules connected to the multiple functional devices, and the multiple control modules are capable of communicating with each other through a first channel. The communication system further includes a second channel, and the second channel is configured to transmit communication information between at least two control modules.

In some examples, each of the multiple functional devices is electrically connected to a respective one of the multiple control modules to communicate in the first channel through the multiple control modules.

In some examples, the second channel is capable of connecting the at least two control modules on the first channel.

In some examples, the second channel enables a communication connection between a head control module of the first channel and a tail control module of the first channel.

In some examples, the communication system is configured to re-plan a communication path including the second channel when the first channel fails, and the multiple functional devices perform data interaction based on the re-planned communication path through the multiple control modules.

In some examples, upon a failure of the first channel, the head control module of the first channel or the tail control module of the first channel is capable of sending information to the remaining control modules through the first channel or the second channel to determine the specific position of the failure.

In some examples, after the tail control module of the first channel receives a failure detection instruction, the multiple control modules connected to the first channel are sequentially accessed forward from the tail control module of the first channel, a first one of the control modules that is incapable of being accessed by the tail control module through the first channel is acquired, the first one of the control modules is used as a second control module, and the specific position of the failure is determined according to a first control module and the second control module.

In some examples, the failure of the first channel includes a module failure, a wire harness failure, or a connector failure.

In some examples, the multiple functional devices further include a mowing assembly, a support assembly, a control panel, and an illumination assembly.

In some examples, a communication mode of the first channel or a communication mode of the second channel includes a 485 bus, a Controller Area Network (CAN) bus, and a LINE (Local Interconnect Network) bus.

In some examples, a communication mode of the first channel or a communication mode of the second channel includes at least one of wired communication, wireless communication, and vehicle frame carrier communication.

In some examples, the first signal or the second signal is configured as follows: information or instructions are transmitted between the multiple control modules through the vehicle frame when the vehicle frame carrier communication is used.

In some examples, each of the multiple control modules includes a controller and a transceiver assembly, the transceiver assembly includes a modem module, a signal amplification circuit, a detection circuit, and a signal coupling assembly, the modem module and the signal coupling assembly form a transmitting unit, the signal coupling assembly, the detection circuit, the signal amplification circuit, and the modem module form a receiving unit, the carrier center frequency of the modem module 3121 is greater than or equal to 10 MHz and less than or equal to 12 MHz.

In some examples, a communication mode of the first channel is the same as a communication mode of the second channel.

In some examples, a communication mode of the first channel is different from a communication mode of the second channel.

To achieve the preceding object, the present application adopts the technical solution described below. A mower includes: a vehicle body including a vehicle frame; and multiple functional devices. The multiple functional devices include at least: a traveling assembly including traveling wheels for driving the mower to travel on the ground and a traveling motor for driving the traveling wheels; an operation assembly configured to be operated by a user to control the mower; and a power supply assembly configured to supply energy to the traveling assembly. The mower further includes a communication system, where the communication system includes control modules connected to the multiple functional devices. The communication system is configured to re-plan a communication path including the second channel when the first channel fails, and the multiple functional devices perform data interaction based on the re-planned communication path through the multiple control modules.

To achieve the preceding object, the present application adopts the technical solution described below. An all-terrain vehicle includes a seat used for a user to sit thereon; a vehicle frame used for supporting the seat; multiple functional devices including at least a traveling assembly including traveling wheels for driving the all-terrain vehicle to travel on the ground and a traveling motor for driving the traveling wheels, an operation assembly configured to be operated by the user to control the all-terrain vehicle, and a power supply assembly configured to supply energy to the traveling assembly; and a communication system including multiple control modules connected to the multiple functional devices. The multiple control modules are capable of communicating with each other through a first channel. The communication system further includes a second channel, and the second channel is configured to be usable for transmitting communication information between at least two control modules.

The present application has the benefits described below. The communication system is configured in the mower and the communication system includes the first channel and the second channel such that it can be ensured that the control modules can still maintain the normal communication state when part of the communication system fails. Thus, the failure of the correlation between the functional devices caused by the failure in the communication system is effectively avoided, the coupling degree of communication between the control modules is reduced, the controllability of the mower in the failure state is enhanced, and the position of the failure in the communication system can be accurately determined so that maintenance is facilitated.

### BRIEF DESCRIPTION OF DRAWINGS

FIG. 1 is a structural view of a mower as an example in the present application.
FIG. 2 is a plan view of the structure of the mower in FIG. 1.
FIG. 3 is a schematic diagram showing the framework of a communication system of the mower in FIG. 1.
FIG. 4 is a schematic diagram showing a communication structure of a communication system of the mower in FIG. 3.
FIG. 5 is a structural view of an all-terrain vehicle as an example in the present application.
FIG. 6 is a perspective view of an electric traveling device as an example in the present application.
FIG. 7 is a schematic diagram showing the framework of a communication system of the electric traveling device in FIG. 6.
FIG. 8 is a schematic diagram showing a communication structure of a communication system of the electric traveling device in FIG. 7.
FIG. 9 is a structural view of a riding mower as an example in the present application.
FIG. 10 is a block diagram of a riding mower as another example in the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

In addition to a mower and an all-terrain vehicle in the present application, any other power tools or vehicles with multiple functional devices that need to communicate with each other may fall within the scope of the present application as long as the power tools or vehicles can adopt the substance of the technical solutions disclosed below.

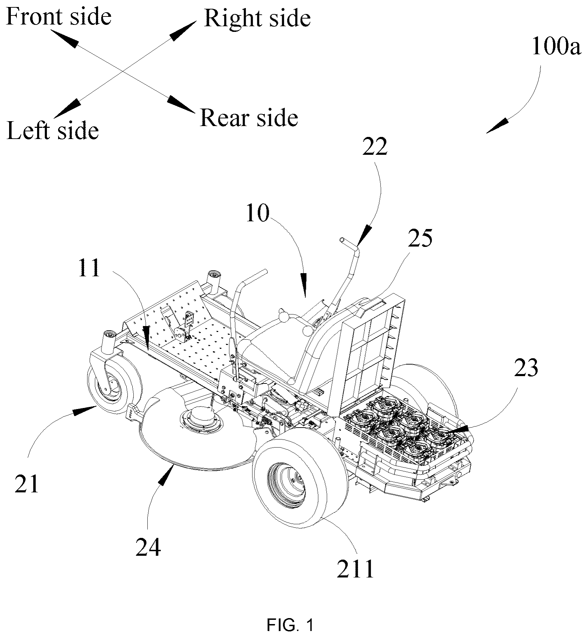

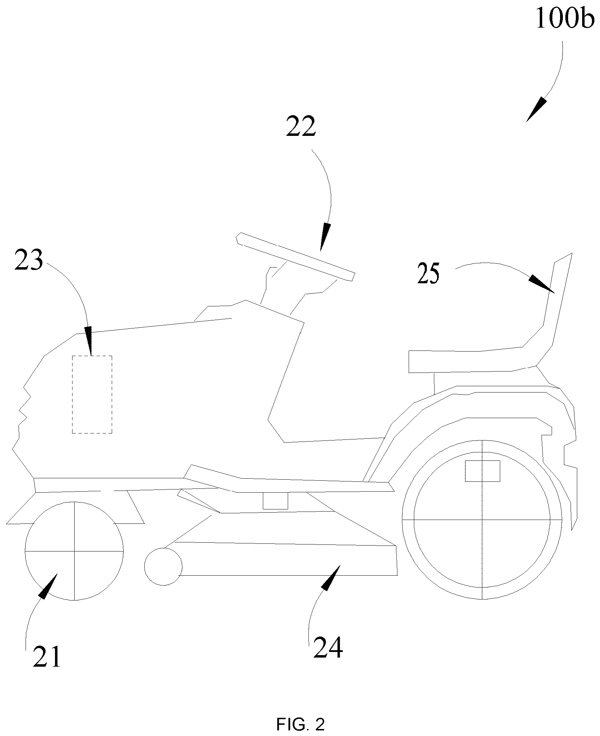

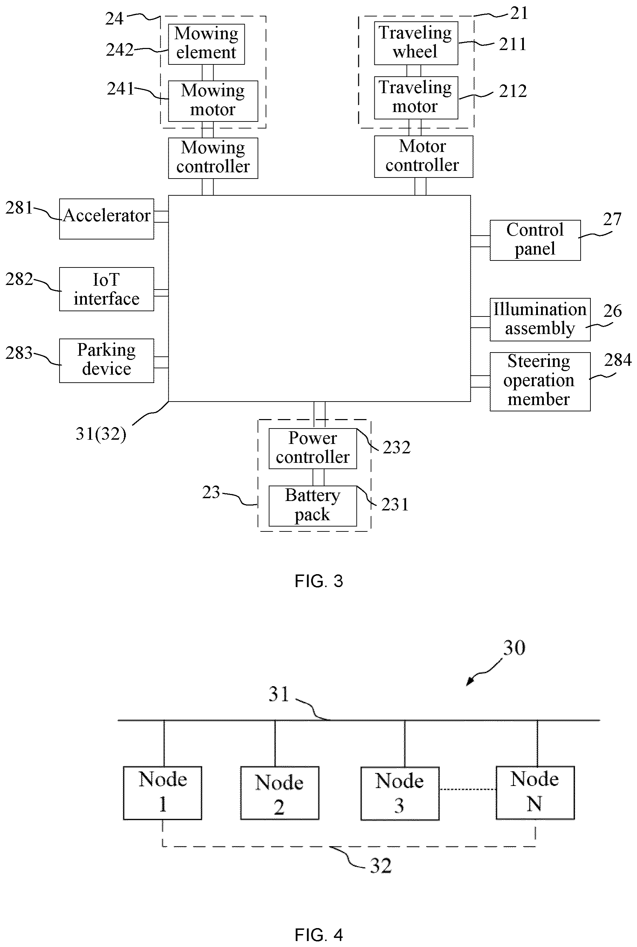

FIG. 1 is a structural view of a mower 100a according to an example of the present application, FIG. 2 is a plan view of the structure of a mower 100b according to another example, FIG. 3 is a schematic diagram showing the framework of a communication system of a mower according to an example of the present application, and FIG. 4 is a schematic diagram showing a communication structure of a communication system of a mower according to an example.

Referring to FIGS. 1, 3, and 4, the mower 100a is specifically a manned mower and includes a vehicle body 10, multiple functional devices, and a communication system 30. The vehicle body 10 includes a vehicle frame 11. The multiple functional devices 20 include, but are not limited to, a traveling assembly 21, an operation assembly 22, and a power supply assembly 23 including at least a battery pack 231 and a power controller 232. The traveling assembly 21 includes traveling wheels 211 for driving the mower 10a to travel on the ground and a traveling motor 212 for driving the traveling wheels 211. The operation assembly 22 is configured to be operated by a user to control the mower 100a. The power supply assembly 23 supplies energy to the traveling assembly 21. The communication system 30 includes multiple control modules connected to the functional devices, and the multiple control modules are capable of communicating with each other through a first channel 31. The communication system 30 further includes a second channel 32, and the second channel 32 is configured to transmit communication information between at least two control modules. In some examples, the second channel 32 is configured to connect the at least two control modules in the first channel 31.

In some examples, the vehicle frame 11 may be used for supporting other components of the mower 100a. For example, when a seat or a support member is disposed on the mower to support the user, the vehicle frame 11 may support the seat or the support member. For another example, the vehicle frame 11 may also support the operation assembly 22 or the power supply assembly 23.

In some examples, one of the traveling wheels 211 may correspond to one traveling motor 212, or multiple ones of the traveling wheels 211 may correspond to one traveling motor 212. The number of traveling wheels 211 is not limited.

In some examples, the user may control the motion state of the mower through the operation assembly 22. In an example, the operation assembly 22 may be further configured to control a working posture of a mowing assembly disposed on the mower.

In some examples, the power supply assembly 23 may supply energy to the traveling motor 212 in the traveling assembly 21 and may also provide energy to other functional devices on the mower 100a.

In some examples, the functional devices of the mower 100a may further include a mowing assembly 24, a support assembly 25, an illumination assembly 26, and the like. The mowing assembly 24 includes a mowing element 242 that can be driven to cut a lawn and a mowing motor 241 for driving the mowing element 241. The support assembly 25 may be used for supporting the user. The form of the support assembly includes, but is not limited to, a structure such as a seat and a support frame. The illumination assembly 26 may be configured to provide a light source.

In some examples, the functional devices of the mower 100a may further include a control panel 27. The control panel 27 may be configured to display a working state of the mower, information about a surrounding environment of the mower, and the like to the user. The control panel 27 may also be configured to provide the user with buttons for controlling various functional devices of the mower, but the uses of the control panel 27 are not limited to the preceding ones. In an example, the control panel 27 may be connected to the mower by externally connecting the control panel 27. In another example, the control panel 27 may be fixed on the mower and may be disposed at any visible position on the mower.

It is to be understood that if cooperative work between the functional devices on the mower needs to be implemented, a communication connection between the functional devices needs to be established. In the related art, most functional devices applied to the mower do not have a direct communication capability. Therefore, in the present application, each functional device may be connected to one control module, and communication between the functional devices is implemented through communication between the control modules. However, it is to be noted that with the development of technology, the functional devices on the mower may have the direct communication capability. In this case, it may be unnecessary to connect the control modules to the functional devices, and a structure for performing communication in the functional device may be equivalent to a functional module provided in the present application.

As shown in FIG. 3, the control modules of the mower 100a may be connected to the functional devices controlled by the control modules, and the control modules of the functional devices may be connected to a bus. In the example shown in FIG. 3, the functional devices of the mower 100a may further include an accelerator 281, an Internet of Things (IoT) interface 282, a parking device 283, and a steering operation member 284. However, the functional devices in FIG. 3 are only illustrative and cannot cover all functional devices.

In the example shown in FIG. 4, the communication system 30 includes N nodes, and each node is equivalent to a combination of one functional device and a control module connected to the functional device. The nodes in the mower 100a may be connected to each other in the form of a daisy chain in the first channel 31. The drawings of the specification of the present application are only illustrative. The control modules and the functional devices in the present application are not limited to the control modules and the functional devices shown in FIG. 3. In addition, the connection manners between the nodes in the present application are not limited to the connection manners between the nodes shown in FIG. 4.

In some examples, the communication system 30 in the mower 100a includes multiple control modules. Each control module is connected to one of the functional devices. The control modules may communicate through the first channel 31 in the communication system 30. In an example, the communication mode of the first channel 31 or the communication mode of the second signal 32 may be bus communication. The bus communication includes, but is not limited to, bus structures such as a 485 bus, a CAN bus, and a LINE bus. In another example, the communication system 30 may further include the second channel 32, and the second channel 32 may be connected to a head control module of the first channel 31 and a tail control module of the first channel 31. Referring to the example shown in FIG. 4, if the nodes are connected in series in the manner of the daisy chain, node 1 is used as a head node of the first channel 31, and node N is used as a tail node of the first channel 31. In this case, node 1 and node N are connected to each other through the second channel 32 so that the N nodes in the communication system are connected into a circular closed loop.

When the communication system 30 of the mower 100a runs without a failure, the control modules in the communication system 30 communicate through the first channel 31. In an example, a control module sends communication information including destination address information to the bus. Each of the other control modules may obtain the preceding communication information on the bus and determine whether the destination address information in the communication information is consistent with the address information of the control module. If the destination address information in the communication information is consistent with the address information of the control module, the communication information may be processed. If the destination address information in the communication information is inconsistent with the address information of the control module, the communication information may be ignored.

In some examples, the communication mode of the first channel 31 or the communication mode of the second channel 32 may include at least one of wired communication, wireless communication, and vehicle frame carrier communication. The wired communication includes, but is not limited to, the bus communication. The wireless communication includes, but is not limited to, Bluetooth, Zigbee, a wireless network, and other communication modes. The vehicle frame carrier communication may be understood as follows: the body of the vehicle frame is used as a communication channel. The communication mode of the second channel 32 may be the same as the communication mode of the first channel 31. For example, both the communication mode of the second channel 32 and the mode of the first channel 31 are the bus communication. The communication mode of the second channel 32 may be different from the communication mode of the first channel 31. The vehicle frame carrier communication described above is described in detail below.

In some examples, another component that matches the communication mode of the second channel 32 may also be provided in the communication system 30. For example, when the second channel 32 adopts Bluetooth communication, a Bluetooth transceiver device should be further provided in the communication system 30. Components that match the communication mode of the second channel 32 are not listed one by one here.

In some examples, a specific communication mode of the second channel 32 may be determined according to an actual requirement. For example, if the reliability and flexibility of communication need to be ensured, the wired communication may be considered and selected as the second channel 32. In some examples, if it is necessary to ensure that the second channel 32 is not bound by a wire harness, the wireless communication may be considered and selected as the second channel 32. In some examples, if a strong anti-interference capability and a high communication rate still need to be ensured on the basis of minimizing the number of wire harnesses, the vehicle frame carrier communication may be considered and selected as the second channel 32. The preceding selection of the communication mode of the second channel 32 is only illustrative and does not limit a method for selecting the communication mode of the second channel 32.

In some examples, the second channel 32 may be connected to any two control modules in the first channel 31 that are not adjacent to each other. Referring to the example shown in FIG. 4, the second channel 32 may be connected to node 1 and node 3 or may be connected to node 2 and node N.

In some examples, after it is determined that the first channel 31 in the communication system 30 fails, the communication between the control modules may be implemented by means of the second channel 32. The failure of the first channel 31 may include a module failure, a wire harness failure, or a connector failure. The wire harness failure includes, but is not limited to, an open circuit or a short circuit in a wire harness.

In an example, the multiple control modules connected to the first channel 31 may be accessed through the head control module of the first channel 31 such that it is determined whether a failure exists in the first channel 31. When a control module that cannot be accessed by the head control module exists in the multiple control modules connected to the first channel 31, it may be determined that the first channel 31 fails. In another example, if a certain control module in the communication system 30 sends communication information to the other control modules but fails to obtain feedback information within a specified period of time, it may also be determined that the first channel 31 fails.

In some examples, after the first channel 31 fails, a communication path including the second channel 32 may be re-planned in the communication system 30 so that it is ensured that the functional devices can still communicate normally to implement the cooperative work. The control modules may perform data interaction over the re-planned communication path.

In some examples, the re-planned communication path may include the second channel 32 and part of the first channel 31 that does not fail. The re-planned communication channel may enable the normal communication between the control modules.

The communication structure shown in FIG. 4 is used as an example. In an example, if the control module in node 2 fails, node 1 cannot normally communicate with node 3 and subsequent nodes thereof. In this case, if node 1 needs to communicate with node 3, node 1 may first send data to node N through the second channel 32, and then the data is continuously transmitted through the first channel 31 on the side of node N. In another example, if a wire harness between node 2 and node 3 is disconnected or short-circuited and node 1 needs to communicate with node 2 in this case, node 1 may still communicate with node 2 through the original first channel 31. However, if node 1 needs to communicate with node 3, node 1 may first send data to node N through the second channel 32, and then the data is continuously transmitted to node 3 through the first channel 31 on the side of node N.

Since a node connected to the second channel 32 is variable, the re-planned communication path is not specifically limited as long as the re-planned communication path can complete a target communication task through a loopback communication structure formed by the second channel 32.

In some examples, when the first channel 31 fails, the head control module of the first channel 31 or the tail control module of the first channel 31 may send information to the other communication modules through the first channel 31 or the second channel 32 to determine the specific position of the failure.

In an example, first, the multiple control modules connected to the first channel 31 may be sequentially accessed backward from the head control module of the first channel 31, and the first one of the control modules that cannot be accessed by the head control module through the first channel 31 is acquired and used as a first control module. Then, the head control module of the first channel 31 may send a failure detection instruction to the tail control module of the first channel 31 over the re-planned communication path. After the tail control module of the first channel 31 receives the failure detection instruction, the multiple control modules connected to the first channel 31 are sequentially accessed forward from the tail control module of the first channel 31. The first one of the control modules that cannot be accessed by the tail control module through the first channel 31 is acquired and used as a second control module. Finally, the specific position of the failure is determined according to the first control module and the second control module. Generally, the specific position of the failure is between the first control module and the second control module.

In another example, first, the failure detection instruction may be sent from a middle control module of the first channel 31 to the head control module of the first channel 31. If the middle control module can receive the detection feedback information returned by the head control module, it may be indicated that a failure point is at a certain position behind the middle control module. If the middle control module cannot receive the detection feedback information returned by the head control module, it may be indicated that the failure point is at a certain position before the middle control module. In some examples, if the failure point is at a certain position behind the middle control module, it may be determined whether the number of control modules behind the middle control module is greater than a preset threshold or not. If the number of control modules is greater than the preset threshold, another control module may be searched between the middle control module and the tail control module to send the failure detection instruction to the middle control module, and the preceding operations are repeated. If the number of control modules is less than the preset threshold, the middle control module may send the detection feedback information to the control modules behind the middle control module one by one until a certain control module cannot return the detection feedback information. Assuming that the X-th control module cannot return the detection feedback information, the failure detection instruction is sent to the head control module through the re-planned communication channel from the X-th control module to the tail control module one by one. When the head control module cannot receive the failure detection instruction from a certain control module, it is considered that the failure is at the position of the control module.

With the preceding technical solutions, the mower with the fault self-diagnosis function can be provided, and when communication between some functional devices of the mower is abnormal, communication between the remaining functional devices can still be implemented.

It is to be understood that a failure positioning manner of the first channel is not limited to the preceding examples and any other method by which the failure in the first channel can be positioned through the second channel falls within the scope of the present application.

According to the technical solutions in the examples of the present application, the communication system is configured in the mower, and the communication system includes the first channel and the second channel such that it can be ensured that the control modules can still maintain the normal communication state when part of the communication system fails. Thus, the failure of the correlation between the functional devices caused by the failure in the communication system is effectively avoided, the coupling degree of communication between the control modules is reduced, the controllability of the mower in the failure state is enhanced, and the position of the failure in the communication system can be accurately determined so that maintenance is facilitated.

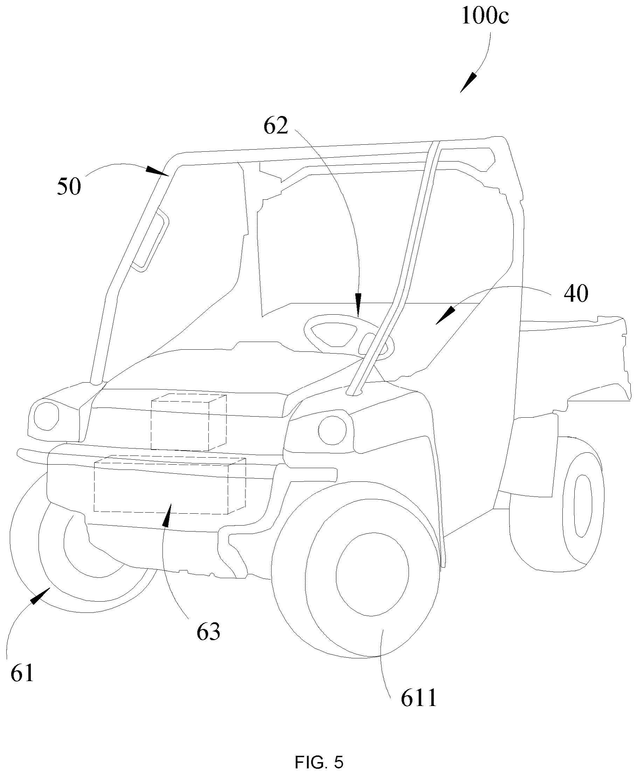

The preceding communication system may also be applied to the mower 100b shown in FIG. 2 and the all-terrain vehicle 100c shown in FIG. 5. The working principles of the components of the mower 100b shown in FIG. 2 are the same as those of the mower 100a described above, and the details are not repeated here.

As shown in FIG. 5, the all-terrain vehicle 100c includes a seat 40, a vehicle frame 50, multiple functional devices, and a communication system. The seat 40 is used for the user to sit thereon. The vehicle frame 50 is used for supporting the seat. The multiple functional devices include, but are not limited to, a traveling assembly 61, an operation assembly 62, and a power supply assembly 63. Specifically, the traveling assembly 61 includes traveling wheels 611 for driving the all-terrain vehicle 100c to travel on the ground and a traveling motor for driving the traveling wheels. The operation assembly 62 is configured to be operated by the user to control the all-terrain vehicle. The power supply assembly 63 supplies energy to the traveling assembly 61. The communication system includes multiple control modules connected to the functional devices, and the multiple control modules communicate with each other through a first channel. The communication system further includes a second channel. The second channel is connected to at least two control modules connected to the first channel and is configured to transmit communication information between the at least two control modules.

It is to be understood that if cooperative work between the functional devices on the all-terrain vehicle is implemented, a communication connection between the functional devices needs to be established. In the present application, each functional device may be connected to one control module, and communication between the functional devices is implemented through communication between the control modules. However, it is to be noted that the functional devices on the all-terrain vehicle may have a direct communication capability. In this case, it may be unnecessary to connect the control modules to the functional devices, and a structure for performing communication in the functional device may be equivalent to a functional module provided in the present application.

The schematic diagram of the communication structure shown in FIG. 4 is also applicable to the communication system of the all-terrain vehicle 100c. When the schematic diagram of the communication structure shown in FIG. 4 is applied to the all-terrain vehicle, each node in FIG. 4 may be equivalent to a combination of one functional device in the all-terrain vehicle and a control module connected to the functional device. In the all-terrain vehicle, each of the multiple control modules is electrically connected to a respective one of the functional devices, and the functional devices can communicate in the first channel 31 through the corresponding control modules.

In some examples, the communication system in the all-terrain vehicle 100c includes the multiple control modules. Each control module is connected to one of the functional devices. The control modules may communicate through the first channel 31 in the communication system. In an example, the communication mode of the first channel 31 may be bus communication. The bus communication includes, but is not limited to, a 485 bus, a CAN bus, and a LINE bus. In an example, the communication system may further include the second channel 32 configured to transmit the communication information between the at least two control modules. In some examples, the second channel 32 may be connected to a head control module of the first channel 31 and a tail control module of the first channel 31. Referring to the example shown in FIG. 4, after the nodes are connected in series in the manner of a daisy chain, node 1 may be considered as a head node of the first channel 31, and node N may be used as a tail node of the first channel 31. In this case, node 1 and node N are connected to each other through the second channel 32 so that the nodes are connected into a circular closed loop.

In some examples, the communication mode of the second channel 32 may include at least one of wired communication, wireless communication, and vehicle frame carrier communication. The wired communication includes, but is not limited to, the bus communication. The wireless communication includes, but is not limited to, Bluetooth, Zigbee, a wireless network, and other communication modes. The vehicle frame carrier communication may be understood as follows: the body of the vehicle frame is used as a communication channel. The communication mode of the second channel 32 may be the same as the communication mode of the first channel 31. For example, both the communication mode of the second channel 32 and the mode of the first channel 31 are the bus communication. The communication mode of the second channel 32 may be different from the communication mode of the first channel 31. Of course, another component that matches the communication mode of the second channel 32 may also be provided in the communication system. For example, when the second channel 32 adopts Bluetooth communication, a Bluetooth transceiver device should be further provided in the communication system. Components that match the communication mode of the second channel 32 are not listed one by one here.

In some examples, the second channel 32 may be connected to any two control modules in the first channel 31 that are not adjacent to each other. Referring to the example shown in FIG. 4, the second channel 32 may be connected to node 1 and node 3 or may be connected to node 2 and node N.

In some examples, after it is determined that the first channel 31 in the communication system fails, the communication between the control modules may be implemented by means of the second channel 32. The failure of the first channel 31 may include a module failure, an open circuit in a wire harness, or a short circuit in a wire harness.

In an example, the multiple control modules connected to the first channel 31 may be accessed through the head control module of the first channel 31 such that it is determined whether a failure exists in the first channel 31. When a control module that cannot be accessed by the head control module exists in the multiple control modules connected to the first channel 31, it may be determined that the first channel 31 fails. In another example, if a certain control module in the communication system 70 sends communication information to the other control modules but fails to obtain feedback information within a specified period of time, it may also be determined that the first channel 31 fails.

In some examples, after the first channel 31 fails, a communication path including the second channel 32 may be re-planned in the communication system 70 so that it is ensured that the functional devices can still communicate normally to implement the cooperative work. Thus, the control modules may perform data interaction over the re-planned communication path.

According to the technical solutions disclosed in the present application, the communication system is configured in the all-terrain vehicle, and the communication system includes the first channel and the second channel such that it can be ensured that the control modules can still maintain the normal communication state when part of the communication system fails. Thus, the failure of the correlation between the functional devices caused by the failure in the communication system is effectively avoided, the coupling degree of communication between the control modules is reduced, the controllability of the all-terrain vehicle in the failure state is enhanced, and the position of the failure in the communication system can be accurately determined so that maintenance is facilitated.

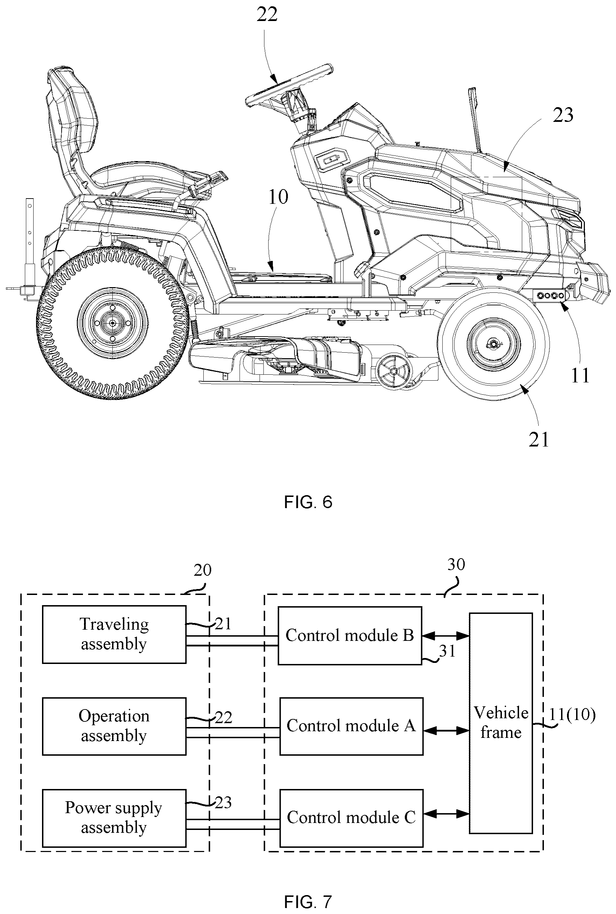

Referring to FIGS. 6 and 7, an electric traveling device includes a vehicle body 10, multiple running devices 20, and a communication system 30. The vehicle body 10 includes a vehicle frame 11. The multiple running devices 20 include a traveling assembly 21, an operation assembly 22, and a power supply assembly 23. The communication system 30 includes multiple control modules 31 connected to the running devices 20. In an example of the present application, the control modules 31 include a control module A electrically connected to the operation assembly 22, a control module B electrically connected to the traveling assembly 21, and a control module C electrically connected to the power supply assembly 23. The multiple control modules 31 transmit information or instructions through the vehicle frame 11. The running devices 20 cooperate with the corresponding control modules 31 to work and cause the electric traveling device to run. It is to be noted that the running devices in this example may be understood as the functional devices in the preceding examples.

Specifically, the operation assembly 22 receives a traveling instruction sent by the user and sends the traveling instruction to the control module A, the control module A receives and transmits the traveling instruction to the control module B through the vehicle frame 11, and the control module B reads and executes the traveling instruction and controls the traveling assembly 21 to start working. The traveling assembly 21 includes a traveling motor and wheels. That is, the traveling motor is controlled to work, and the traveling motor is connected to and drives the wheels to roll and drive the electric traveling device to travel on the ground. It is to be understood that the control module C is communicatively connected to the control module A and the control module B through the vehicle frame 11. In a running process of the electric traveling device, the control module C may send a charging instruction to the power supply assembly 23 according to the running information of the traveling assembly 21 transmitted by the control module B and received on the vehicle frame 11 or the running information of the operation assembly 22 transmitted on the control module A and the power parameter information within the power supply assembly 23 so that the power supply assembly 23 supplies power to the traveling assembly 21 according to the charging instruction.

It is to be noted that the multiple control modules 31 transmit the instructions or the information through the vehicle frame 11 in this example, which means that the instructions or information sent or received by the control modules 31 is coupled to the vehicle frame 11 instead of being transmitted by means of data wires. The vehicle frame 11 here should be understood as the body of the vehicle frame that has a conductive capability and is used as a support structure. Of course, in some other examples, the body of the vehicle frame includes a conductive layer attached to a surface of the vehicle frame, and the conductive layer extends substantially along the vehicle frame. In the related art, the control modules 31 perform data communication between the nodes by using dedicated communication wire harnesses. When the device travels outdoors or performs a function, bumps on a road surface easily cause poor contact between the communication wire harnesses. In the present application, the communication quality and communication efficiency between the control modules in the electric traveling device are implemented through the vehicle frame 11, thereby improving the running efficiency of the electric traveling device. With the technical solutions of the present application, the poor contact and the like caused by the adoption of the dedicated communication wire harnesses can be avoided, or the redundancy of the wire harnesses and the interference between the wire harnesses can be avoided.

It is also to be noted that the communication between a first control module and a second control module (here, the first control module and the second control module may be any two of the control module A, the control module B, and the control module C mentioned above, and the specific types of the first control module and the second control module are not limited here) that are included by the control modules is used as an example, the first control module sends information or an instruction including address information to the vehicle frame 11, and the second control module is configured to acquire the information or instruction transmitted on the vehicle frame 11 and determine, based on the address information, whether to receive and execute the preceding information or instruction when the first control module communicates with the second control module. Thus, when receiving a signal or the instruction, the control module directly reads and acquires the address information transmitted through the signal or the instruction so that the type and source of the signal or the instruction can be acquired, and the control module determines, according to the type and source of the signal or the instruction, an execution object to which the signal or the instruction is transmitted. Thus, the efficiency and accuracy with which the communication system transmits data are improved, and information integration and allocation are facilitated.

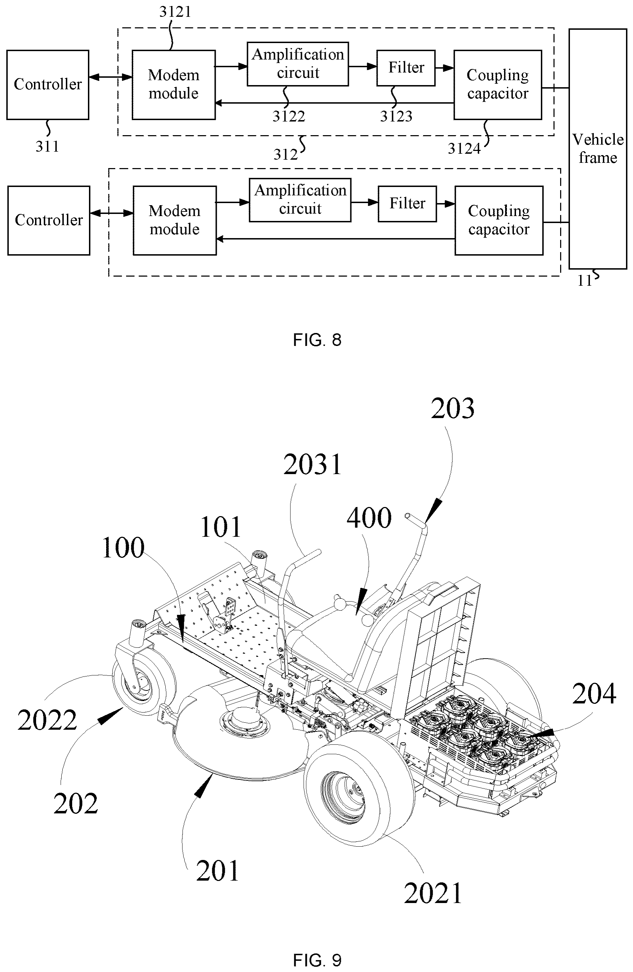

In some examples, as shown in FIG. 8, each control module 31 includes a controller 311 and a transceiver assembly 312. The transceiver assembly 312 includes a modem module 3121, a signal amplification circuit 3122, a detection circuit 3123, and a signal coupling assembly 3124. The modem module 3121 and the signal coupling assembly 3121 form a transmitting unit. Thus, the controller 311 transmits the information or the instruction to the modem module 3121 so that the modem module 3121 modulates the information or the instruction and the modulated information or instruction is coupled to the vehicle frame 11 through the signal coupling assembly 3124.

In some examples, the signal coupling assembly 3124, the detection circuit 3123, the signal amplification circuit 3122, and the modem module 3121 form a receiving unit. Thus, the signal coupling assembly 3124 transmits the information or the instruction transmitted through the vehicle frame 11 to the detection circuit 3123 through coupling, and the detection circuit 3123 filters the information or the instruction that is transmitted by the signal coupling assembly 3124 through coupling. The signal amplification circuit 3122 amplifies and outputs the filtered information or instruction to the modem module 3121, and the controller 311 may receive the information or instruction demodulated by the modem module 3121.

Specifically, the carrier center frequency of the modem module 3121 is greater than or equal to 10 MHz and less than or equal to 12 MHz. In some examples, the carrier center frequency of the modem module 3121 is approximately 10.7 MHz. The information or instruction outputted by the controller 311 is a parallel digital signal. The modem module 3121 loads the digital signal to the carrier center frequency of 10.7 MHz and modulates the digital signal loaded to the carrier center frequency of 10.7 MHz. Then, the signal coupling assembly 3124 couples the modulated digital signal to the vehicle frame 11. Thus, the information or instruction outputted by the controller 311 is sent.

A specific process in which the controller 311 receives information or an instruction sent by another controller through the vehicle frame 11 is as follows: the detection circuit 3123 filters the information or instruction transmitted by the signal coupling assembly 3124 through coupling to obtain an analog signal whose carrier center frequency is 10.7 MHz, the signal amplification circuit 3122 amplifies the analog signal whose carrier center frequency is 10.7 MHz, and the modem module 3121 demodulates the amplified analog signal whose carrier center frequency is 10.7 MHz to output a digital signal to the controller 311. In some examples, the signal amplification circuit 3122 may be integrated into the modem module 3121. That is, the modem module 3121 may both amplify the analog signal whose carrier center frequency is 10.7 MHz and demodulate the amplified analog signal whose carrier center frequency is 10.7 MHz to output the digital signal to the controller 311.

The signal coupling assembly 3124 may bypass a high-frequency noise. In some examples, referring to FIG. 8, the signal coupling assembly 3124 is configured as a safety capacitor, and the capacitance range of the safety capacitor is as follows: C ≤ 1000 pF. In some examples, the signal coupling assembly 3124 may be configured as an inductor for coupling signals. The capacitance range of the signal coupling assembly 3124 is as follows: C ≤ 1000 pF. Generally, the typical value of the distributed inductance of the capacitance range is as follows: L ≤ 5 µH. That is, the coupling capacitance of 1000 pF corresponds to a distributed inductance of µH. The parallel resonance frequency of the coupling capacitor is as follows: f ≤ 7 MHz. That is to say, when the capacitance range of the signal coupling assembly 3124 is as follows: C ≤ 1000 pF, the signal coupling assembly 3124 has a better decoupling effect on a noise below 10 MHz. Further, the detection circuit 3123 filters the information or instruction transmitted by the signal coupling assembly 3124 through coupling so that the analog signal whose carrier center frequency is 10.7 MHz is obtained, and thus, the signal quality of the demodulated signal inputted to the modem module 3121 can be ensured. It is to be noted that those skilled in the art need to set the capacitance of the coupling capacitor according to a specific working condition of the electric traveling device. The capacitance of the coupling capacitor is not limited in the present application.

In some examples, the controller 311 and the transceiver assembly 312 are coated with an insulating material; a conductive layer is disposed at one end of the detection circuit 3123 close to the vehicle frame 11 or a conductive layer is disposed on one side of the modem module 3121 close to the vehicle frame 11; the signal coupling assembly 3124 is formed between the conductive layer and the vehicle frame 11, that is, the signal coupling assembly 3124 in the preceding examples may be constituted by the conductive layer and the vehicle frame 11; and the conductive layer is electrically connected to the detection circuit 3123 and the modem module 3121. Thus, the signal coupling assembly 3124 is directly constituted by the conductive layer and the vehicle frame 11 so that it is unnecessary to provide the signal coupling assembly 3124 and the space utilization rate of the overall communication system is improved. Of course, it is to be understood that since the capacitance range of the signal coupling assembly 3124 formed between the conductive layer and the vehicle frame 11 needs to satisfy the following: C ≤ 1000 pF, the cross-sectional area of the conductive layer and the distance between the conductive layer and the vehicle frame 11 may be set according to the value range of the coupling capacitance, that is, C ≤ 1000 pF.

In some examples, the control module 31 is configured to send the information or the instruction to the vehicle frame when detecting that the communication system is in an idle mode. The control module is further configured to set the communication system to the idle mode when the information or instruction transmitted by the vehicle frame is not received within a preset period of time. In an actual communication process, information or instructions need to be transmitted between every two control modules through the vehicle frame 11 at the same time. Exemplarily, while the control module A transmits the information or the instruction to the control module B through the vehicle frame 11 in the preceding examples, the control module C also transmits information or an instruction to another control module through the vehicle frame 11. To avoid transmission competition of information or instructions on the vehicle frame 11, when the control module A does not receive the information or instruction transmitted by the vehicle frame 11 within the preset period of time (it is to be noted here that the control module A may receive, according to the address information, the information or instruction sent by a specific control module or may receive the information or instruction sent by the control module C), in other words, the control module C does not send the information or the instruction to the vehicle frame 11 within the preset period of time, the control module A may send the information or the instruction to the vehicle frame. Thus, the transmission competitiveness of the information or the instructions on the vehicle frame 11 can be avoided.

It is also to be noted that the communication system disclosed in this example may be applied to various types of electric traveling devices. For example, the communication system may be applied to a riding mower and other types of electric riding machines used for working indoors or outdoors. Here, devices that can output power in other forms to implement other functions in addition to power for traveling on the ground may be considered as electric riding machines such as riding snow throwers, riding agricultural machines, riding mops, riding sweepers, and all-terrain vehicles. The specific type of the electric traveling device is not specifically limited here.

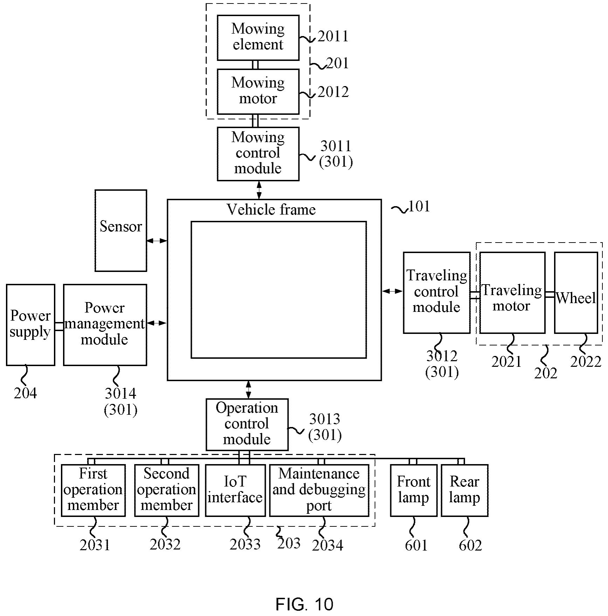

The following description is performed by using the example in which the communication system is applied to a riding mower. FIG. 9 is a structural view of a riding mower according to an example of the present application, and FIG. 10 is a block diagram of a riding mower according to a first preferred example of the present application. As shown in FIGS. 9 and 10, the riding mower includes: a vehicle body 100 including a vehicle frame 101; running devices 200 including a power output assembly 201, a traveling assembly 202, and an operation assembly 203; and a communication system 300 including control modules 301 connected to the running devices 200. Information or instructions are transmitted between the multiple control modules 301 through the vehicle frame 101.

In some examples, the power output assembly 201 includes a mowing element 2011 and a mowing motor 2012. The mowing element 2011 and the mowing motor 2012 are connected to each other. The control module corresponding to the power output assembly 201 is a mowing control module 3011. The mowing control module 3011 is electrically connected to the mowing motor 2012. The control module corresponding to the operation assembly 203 is an operation control module 3013. The mowing control module 3011 and the operation control module 3013 transmit information or instructions through the vehicle frame 101. Specifically, the operation assembly 203 receives a mowing instruction sent by the user and sends the mowing instruction to the operation control module 3013. The operation control module 3013 receives the mowing instruction and transmits the mowing instruction to the mowing control module 3011 through the vehicle frame 101. The mowing control module 3011 reads and executes the mowing instruction, and the mowing control module 3011 controls the mowing motor 2012 to run so as to drive the mowing element 2011 to rotate at a high speed to mow a lawn.

The traveling assembly 202 includes a traveling motor 2021 and wheels 2022. The control module electrically connected to the traveling assembly 202 is a traveling control module 3012. Exemplarily, the traveling control module 3012 may be a motor controller. The motor controller is electrically connected to the traveling motor 2021. The traveling motor 2021 is mechanically connected to the wheels 2022. The motor controller and the operation control module 3013 transmit information or instructions through the vehicle frame 101. The operation assembly 203 receives a traveling instruction from the user, and the operation control module 3013 sends the traveling instruction to the motor controller so as to control the rotational speed and direction of the wheels 2022. In addition, the mowing control module 3011 and the motor controller may transmit information or instructions through the vehicle frame 101. The mowing control module 3011 may control the running speed of the mowing motor 2012 in real time according to parameter information of the traveling motor 2021 received by the motor controller.

Referring to FIGS. 9 and 10, the riding mower also includes a power supply assembly 204 for providing electric energy. The power supply assembly 204 includes a power supply. The control module corresponding to the power supply assembly 204 is a power management module 3014. The power management module 3014 is electrically connected to the power supply. The power management module 3014 is communicatively connected to the operation control module 3013, the motor controller, and the mowing control module 3011 through the vehicle frame 11. The power management module 3014 issues a power supply instruction according to information outputted by the operation control module 3013, the motor controller, and the mowing control module 3011. The power supply supplies power to the operation assembly 203, the power output assembly 201, and the traveling assembly 202 according to the power supply instruction.

In some examples, the power supply includes at least a battery, specifically at least a battery pack. The battery pack is removable from the riding mower so that the battery life of the riding mower can be prolonged through the replacement of the battery pack during use. The power supply assembly 204 is also provided with a charging socket. The battery pack mounted in the riding mower can be charged through the charging socket.

Referring to FIGS. 9 and 10, the riding mower further includes a seat 400, and the vehicle frame 101 is also used for carrying the various modules of the riding mower. Specifically, the vehicle frame 101 is used for supporting the seat 400, the power output assembly 201, the traveling assembly 202, the operation assembly 203, the power supply, and the like. The seat 400 is fixed on the vehicle body 100 of the riding mower so that the electric riding mower can be ridden by the user. When sitting on the electric riding mower, the user can operate the electric riding mower to mow a lawn, vegetation, and the like quickly and effortlessly. Compared with a push mower, the electric riding mower in the present application does not require the user to push the machine or walk on the ground. Moreover, the electric riding mower can be used by the user to trim larger lawns due to the larger size and longer battery life thereof, and the user can also.

The operation assembly 203 includes a first operation member 2031 and a second operation member 2032, and the operation control module 3013 is connected to the first operation member 2031 and the second operation member 2032 separately. The first operation member 2031 and the second operation member 2032 are operated by the user to control the riding mower. The first operation member 2031 is operated by the user to control the travel of the riding mower, and the second operation member 2032 is operated by the user to control the work of the riding mower. Specifically, the user inputs control instructions through the first operation member 2031 and the second operation member 2032 and sends the control instructions to the vehicle frame 101 through the operation control module 3013, and the vehicle frame 101 sends the control instructions to the corresponding execution assemblies.

In some examples, the first operation member 2031 is implemented as operation levers. The operation levers are disposed on two sides of the seat 400 or around the seat 400. In this case, the operation control module 3013 includes a steering controller and a speed controller. The operation levers are connected to the steering controller and the speed controller through data lines. The steering controller and the speed controller convert the motions of the operation levers into corresponding traveling instructions. The traveling instructions include a running control instruction, a speed change instruction, a steering instruction, a stop instruction, and the like. The steering controller sends the converted traveling instructions to the motor controller through the vehicle frame 101. The motor controller executes motions according to the traveling instructions to control the traveling motor 2021 to run so as to drive the wheels 2022 to rotate. At the same time, the speed and direction of the wheels 2022 are controlled and thus the running direction and speed of the riding mower are changed so that the user controls the travel of the riding mower. It is to be understood that the first operation member 2031 may be implemented as another control device such as a pedal, a switch, or a handle.

In some examples, the second operation member 2032 is implemented as a control panel. The control panel includes multiple switches. Different switches correspond to different control instructions. The user inputs different control instructions through the switches to operate the riding mower. Similarly, the user sends control instructions to the operation control module 3013 through the switches on the control panel. The operation control module 3013 couples the control instructions to an instruction execution object through the vehicle frame 101, and the instruction execution object executes the control instructions. The control instructions include an instruction to start mowing, an instruction on mowing power, and the like.

The operation assembly 203 also includes an loT interface 2033 connected to the operation control module 3013. The loT interface 2033 allows the operation assembly 2031 to be connected to a network wirelessly. The user may connect the riding mower to a mobile smart device such as a mobile phone and a smart watch through the loT interface 2033 and control the running of the riding mower through the mobile smart device. Specifically, the user connects the mobile smart device to the loT interface 2034 of the riding mower and sends a control instruction. The loT interface 2033 sends the control instruction to the operation control module 3013. The operation control module 3013 sends the instruction to an execution object through the vehicle frame, and the execution object executes the instruction.

The operation assembly 203 further includes a maintenance and debugging port 2034 connected to the operation control module 3013. The user inputs adjustment parameters through the maintenance and debugging port 2034, and the operation control module 3013 distributes the adjustment parameters to the corresponding execution objects through the vehicle frame 101 according to information about the adjustment parameters. After the parameters are debugged, the execution objects feed back running data to the maintenance and debugging port 2034 through the vehicle frame 101 separately to achieve the purpose of detection and maintenance.

The riding mower further includes an illumination assembly 500 for illumination. The illumination assembly 500 includes front lamps 501 and a rear lamp 502. The front lamps 501 and the rear lamp 502 are mounted on the front and rear ends of the riding mower respectively and are used for illuminating grass and an intersection when the riding mower is in use. In some examples, the front lamps 501 include a shadowless lamp, a head lamp, a left running lamp, and a rear running lamp. The front lamps 501 and the rear lamp 502 are connected to the operation control module 3013 separately. The switches of the second operation member 2032 include switches for controlling the front lamps 501 and the rear lamp 502 to be on. When the user sends, through the second operation member 2032, an instruction to turn on a lamp, the second operation member 2032 sends the instruction to turn on the lamp to the operation control module 3013, and the operation control module 3013 sends the instruction to turn on the lamp to the corresponding front lamp 501 or the rear lamp 502 to control the front lamps 501 or the rear lamp 502 to be on. In addition, when a lamp need to be turned off, an instruction to turn off the lamp is sent to the operation control module 3013 through the second operation member 2032, and the operation control module 3013 sends the instruction to turn off the lamp to the corresponding front lamp 501 or the rear lamp 502 to control the front lamps 501 or the rear lamp 502 to be off.

The riding mower further includes at least one sensor disposed therein. The sensor may be implemented as one or any combination of a current sensor, a voltage sensor, a gyroscope, an accelerometer, an inertial measurement unit, a barometer, and a magnetometer. The sensor is directly connected to the vehicle frame 101 and may detect running information generated in a running process of the riding mower, such as a circuit current, a traveling position, and a speed. In addition, the sensor transmits the information to various running devices 20 through the vehicle frame 10, and the running of the riding mower is adjusted according to the content fed back through the information.

It is also to be noted that in the preceding example, at least two of the traveling control module 3012, the operation control module 3013, and the power management module 3014 transmit information or instructions through the vehicle frame 101. That is, in the process where the control modules coordinate with the riding mower to run, any two of the traveling control module 3012, the operation control module 3013, and the power management module 3014 transmit the information or the instructions through the vehicle frame 101. Any other two of the traveling control module 3012, the operation control module 3013, and the power management module 3014 may further transmit information or instructions through a power distribution data cable. Thus, the information or the instructions can be transmitted through both the vehicle frame 101 and the power distribution data cable, thereby enabling a wider range of applicable scenarios. It is to be understood that the preceding communication system may also be applied to a utility task vehicle (UTV) as shown in FIG. 5. The utility task vehicle may include an all-terrain vehicle (ATV) with four wheels, a utility vehicle (UV), and a go-kart.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A mower, comprising:
a vehicle body comprising a vehicle frame; and
a plurality of functional devices comprising at least:
a traveling assembly comprising traveling wheels for driving the mower to travel on the ground and a traveling motor for driving the traveling wheels;
an operation assembly configured to be operated by a user to control the mower; and
a power supply assembly configured to supply energy to the traveling assembly;
wherein the mower further comprises:
a communication system, wherein the communication system comprises control modules connected to the plurality of functional devices, and the plurality of control modules are capable of communicating with each other through a first channel;
wherein the communication system further comprises a second channel, and the second channel is configured to transmit communication information between at least two control modules among the plurality of control modules.

2. The mower according to claim 1, wherein each of the plurality of functional devices is electrically connected to a respective one of the plurality of control modules to communicate in the first channel through the plurality of control modules.

3. The mower according to claim 1, wherein the second channel is capable of connecting the at least two control modules on the first channel.

4. The mower according to claim 3, wherein the second channel enables a communication connection between a head control module of the first channel and a tail control module of the first channel.

5. The mower according to claim 1, wherein the communication system is configured to re-plan a communication path comprising the second channel when the first channel fails, and the plurality of functional devices perform data interaction based on the re-planned communication path through the plurality of control modules.

6. The mower according to claim 4, wherein upon a failure of the first channel, the head control module of the first channel or the tail control module of the first channel is capable of sending information to remaining control modules among the plurality of control modules through the first channel or the second channel to determine a specific position of the failure.

7. The mower according to claim 6, wherein after the tail control module of the first channel receives a failure detection instruction, the plurality of control modules connected to the first channel are sequentially accessed forward from the tail control module of the first channel, a first one of the control modules that is incapable of being accessed by the tail control module through the first channel is acquired, the first one of the control modules is used as a second control module, and the specific position of the failure is determined according to a first control module and the second control module.

8. The mower according to claim 6, wherein the failure of the first channel comprises a module failure, a wire harness failure, or a connector failure.

9. The mower according to claim 1, wherein the plurality of functional devices further comprise a mowing assembly, a support assembly, a control panel, and an illumination assembly.

10. The mower according to claim 1, wherein a communication mode of the first channel or a communication mode of the second channel comprises a 485 bus, a Controller Area Network (CAN) bus, and a Local Interconnect Network (LINE) bus.

11. The mower according to claim 1, wherein a communication mode of the first channel or a communication mode of the second channel comprises at least one of wired communication, wireless communication, and vehicle frame carrier communication.

12. The mower according to claim 11, wherein the first signal or the second signal is configured as follows: information or instructions are transmitted between the plurality of control modules through the vehicle frame when the vehicle frame carrier communication is used.

13. The mower according to claim 12, wherein each of the plurality of control modules comprises a controller and a transceiver assembly, the transceiver assembly comprises a modem module, a signal amplification circuit, a detection circuit, and a signal coupling assembly, the modem module and the signal coupling assembly form a transmitting unit, the signal coupling assembly, the detection circuit, the signal amplification circuit, and the modem module form a receiving unit, a carrier center frequency of the modem module 3121 is greater than or equal to 10 MHz and less than or equal to 12 MHz.

14. The mower according to claim 1, wherein a communication mode of the first channel is the same as a communication mode of the second channel.

15. The mower according to claim 1, wherein a communication mode of the first channel is different from a communication mode of the second channel.

16. A mower, comprising:
a vehicle body comprising a vehicle frame; and
a plurality of functional devices comprising at least:
a traveling assembly comprising traveling wheels for driving the mower to travel on the ground and a traveling motor for driving the traveling wheels;
an operation assembly configured to be operated by a user to control the mower; and
a power supply assembly configured to supply energy to the traveling assembly;
wherein the mower further comprises:
a communication system, wherein the communication system comprises control modules connected to the plurality of functional devices;
wherein the communication system is configured to re-plan a communication path comprising the second channel when the first channel fails, and the plurality of functional devices perform data interaction based on the re-planned communication path through the plurality of control modules.

17. An all-terrain vehicle (ATV), comprising:
a seat for a user to sit thereon;
a vehicle frame for supporting the seat; and
a plurality of functional devices comprising at least:
a traveling assembly comprising traveling wheels for driving the all-terrain vehicle to travel on the ground and a traveling motor for driving the traveling wheels;
an operation assembly configured to be operated by the user to control the all-terrain vehicle; and
a power supply assembly configured to supply energy to the traveling assembly;
wherein the all-terrain vehicle further comprises:
a communication system, wherein the communication system comprises a plurality of control modules connected to the plurality of functional devices, and the plurality of control modules are capable of communicating with each other through a first channel;
wherein the communication system further comprises a second channel, and the second channel is configured to be usable for transmitting communication information between at least two control modules among the plurality of control modules.
